# EUROPEAN PATENT APPLICATION

(11) **EP 4 841 912 A1**
(43) Date of publication of application: **18.11.2026**
(21) Application number: 25227116.8
(22) Date of filing: 23.12.2025
(51) Int. Cl.: H04B 7/185

(54) **TERMINAL AND OPERATION METHOD FOR SATELLITE COMMUNICATION IN NON-TERRESTRIAL NETWORKS**

(30) Priority: 15.05.2025 KR 20250063187
(71) Applicant: Samsung Electronics Co., Ltd., Suwon-si, Gyeonggi-do 16677 (KR)
(72) Inventor: CHANG, Il, 16677 Suwon-si (KR); YU, Hyunseok, 16677 Suwon-si (KR)
(74) Representative: Marks & Clerk LLP

(57) **Abstract**

A method of operating a terminal may include receiving first system information including information on a first common timing advance (TA) parameter and first ephemeris information of a satellite, receiving second system information including information on a second common TA parameter and second ephemeris information of the satellite, determining a first time delay between the satellite and a base station at a first time point, based on the first common TA parameter and the second common TA parameter, determining a second time delay and a first frequency offset between the satellite and the terminal at a second time point, based on the first ephemeris information and the second ephemeris information, and transmitting a signal compensated based on the first time delay, the second time delay, and the first frequency offset.

## Description

### BACKGROUND

As satellites travel at high speed and high altitude, distortions such as significantly long propagation delay or Doppler shift may occur when receiving or transmitting signals with satellites within non-terrestrial networks through which terminals and satellites communicate with each other. Such distortions may need to be compensated.

### SUMMARY

Example implementations relate to a terminal and an operation method thereof, and more particularly, to a terminal and an operation method or method of operation or operating thereof over a non-terrestrial network.

An aspect provides a terminal and an operation method or method of operating or method of operation thereof for effectively estimating a time delay between a satellite and a base station, and a position and a velocity of a satellite.

The goals to be achieved by example implementations of the present disclosure are not limited to the objects described above, and other objects may be inferred from the following example implementations.

According to an aspect, there is provided an operation method (or method of operating or method of operation) of a terminal, the method including receiving first system information including information on a first common timing advance (TA) parameter and first ephemeris information of a satellite, receiving second system information including information on a second common TA parameter and second ephemeris information of the satellite, determining a first time delay between the satellite and a base station at a first time point, based on the first common TA parameter and the second common TA parameter, determining a second time delay and a first frequency offset between the satellite and the terminal at a second time point, based on the first ephemeris information and the second ephemeris information, and transmitting a signal compensated based on the first time delay, the second time delay, and the first frequency offset. The first system information may be received from the satellite. The first system information may be received from base station via the satellite. The second system information may be received from the satellite. The second system information may be received from the base station via the satellite. The compensated signal may be transmitted to the satellite. The compensated signal may be transmitted to the base station via the satellite.

According to another aspect, there is provided a terminal including a transceiver and one or more processors. The one or more processors are configured to receive first system information including information on a first common TA parameter and first ephemeris information of a satellite, through the transceiver, receive second system information including information on a second common TA parameter and second ephemeris information of the satellite, through the transceiver, determine a first time delay between the satellite and a base station at a first time point based on the first common TA parameter and the second common TA parameter, determine a second time delay and a first frequency offset between the satellite and the terminal at a second time point based on the first ephemeris information and the second ephemeris information, and transmit a signal compensated based on the first time delay, the second time delay, and the first frequency offset, through the transceiver. The first system information may be received from the satellite. The first system information may be received from base station via the satellite. The second system information may be received from the satellite. The second system information may be received from the base station via the satellite. The compensated signal may be transmitted to the satellite. The compensated signal may be transmitted to the base station via the satellite.

According to still another aspect, there is also provided a terminal including a transceiver and one or more processors. The one or more processors are configured to receive first system information through the transceiver at a first time point, receive second system information through the transceiver at a second time point, determine a first time delay between a satellite and a base station, and a second time delay and a first frequency offset between the satellite and the terminal, based on the first system information and the second system information, and transmit a signal compensated based on the first time delay, the second time delay, and the first frequency offset through the transceiver at a third time point. The first system information may be received from the satellite. The first system information may be received from base station via the satellite. The second system information may be received from the satellite. The second system information may be received from the base station via the satellite. The compensated signal may be transmitted to the satellite. The compensated signal may be transmitted to the base station via the satellite.

According to yet another aspect, there is provided a wireless communication system including a terminal, a base station, and a satellite. The base station may transmit first system information including information on a first common TA parameter and first ephemeris information of the satellite to the satellite, and transmit second system information including information on a second common TA parameter and second ephemeris information of the satellite to the satellite. The satellite may receive the first system information from the base station, transmit the first system information to the terminal, receive the second system information from the base station, and transmit the second system information to the terminal. The terminal may receive the first system information from the satellite, receive the second system information from the satellite, determine a first time delay between the satellite and the base station at a first time point based on the first common TA parameter and the second common TA parameter, determine a second time delay and a first frequency offset between the satellite and the terminal at a second time point based on the first ephemeris information and the second ephemeris information, and transmit a signal compensated based on the first time delay, the second time delay, and the first frequency offset.

Detailed descriptions of other example implementations are included in the detailed description and drawings.

At least some of the above and other features of the disclosure are set out in the claims.

### BRIEF DESCRIPTION OF THE FIGURES

These and/or other aspects, features, and advantages of the present disclosure will become apparent and more readily appreciated from the following description of example implementations, taken in conjunction with the accompanying drawings of which:
FIG. 1 illustrates a system according to an example implementation;
FIG. 2 illustrates a process of a terminal transmitting a signal with compensated time delay and frequency offset according to an example implementation;
FIG. 3 illustrates a process of a terminal transmitting a signal with compensated time delay and frequency offset according to an example implementation;
FIG. 4 illustrates a process of a terminal calculating a time delay between a satellite and a base station based on a newly defined model according to an example implementation;
FIG. 5 illustrates a process of a terminal calculating a time delay and a frequency offset between a satellite and a terminal based on a newly defined model according to an example implementation;
FIG. 6 is a diagram for describing a process of a terminal estimating a position of a satellite according to an example implementation;
FIG. 7 is a diagram for describing a process of a terminal estimating a velocity of a satellite according to an example implementation;
FIG. 8 illustrates a process of a terminal transmitting a signal with compensated time delay and frequency offset according to an example implementation;
FIG. 9 is a flowchart illustrating an operation method of a terminal according to an example implementation; and
FIG. 10 is a block diagram of a terminal according to an example implementation.

### DETAILED DESCRIPTION

Terms used in the example implementations are selected, as much as possible, from general terms that are widely used at present while taking into consideration the functions obtained in accordance with the present disclosure, but these terms may be replaced by other terms based on intentions of those skilled in the art, customs, emergence of new technologies, or the like. Also, in a particular case, terms that are arbitrarily selected by the applicant of the present disclosure may be used. In this case, the meanings of these terms may be described in corresponding description parts of the present disclosure. Accordingly, it should be noted that the terms used herein should be construed based on practical meanings thereof and the whole content of this specification rather than being simply construed based on names of the terms.

In the entire specification, when an element is referred to as "comprising" or "including" another element, the element should not be understood as excluding other elements as long as there is no special conflicting description, and the element may include at least one other element.

The expression "at least one of A, B, and C" may indicate the following meaning including: A alone; B alone; C alone; both A and B together; both A and C together; both B and C together; or all three of A, B, and C together.

In the present disclosure, a "terminal" may be implemented as a computer or a portable terminal capable of accessing a server or another terminal through a network. Here, the computer may include, for example, a laptop computer, a desktop computer, and a notebook equipped with a web browser. The portable terminal may be a wireless communication device ensuring a portability and a mobility, and include any type of handheld wireless communication device, for example, a tablet PC, a smartphone, a communication-based terminal such as international mobile telecommunication (IMT), code division multiple access (CDMA), W-code division multiple access (W-CDMA), and long-term evolution (LTE).

In the following description, example implementations of the present disclosure will be described in detail with reference to the drawings so that those skilled in the art can easily carry out the present disclosure. The present disclosure may be embodied in many different forms and is not limited to the example implementations described herein.

As discussed above, as satellites travel at high speed and high altitude within non-terrestrial networks through which terminals and satellites communicate with each other, distortions such as significantly long propagation delay or Doppler shift may occur when receiving or transmitting signals with satellites. Therefore, such distortions may need to be compensated for in advance in order for the terminals to communicate with the satellites seamlessly. To achieve this, the terminals may be required to more accurately estimate the time delay between the satellite and the base station, and the position and velocity of the satellite. Aspects of the present disclosure may address this issue in the related art.

Hereinafter, example implementations of the present disclosure will be described with reference to the drawings.

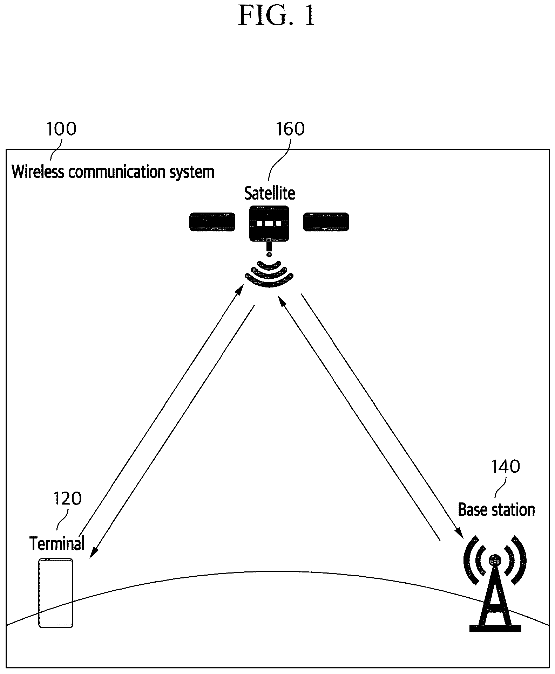

FIG. 1 illustrates a wireless communication system 100 according to an example implementation. As an example, the wireless communication system 100 of FIG. 1 may be an example of a non-terrestrial communication system.

Referring to FIG. 1, the wireless communication system 100 may include a terminal 120, a base station 140, and a satellite 160. However, only components related to the example implementation are shown with respect to the wireless communication system 100 illustrated in FIG. 1. Accordingly, it is to be understood by those skilled in the art that general-purpose components other than the components illustrated in FIG. 1 may also be included in the wireless communication system 100.

As a wireless communication device, the terminal 120 may refer to various types of devices capable of transmitting and receiving data and/or control information through communication with the base station 140. As an example, the terminal 120 may be a user equipment (UE), a mobile station (MS), a mobile terminal (MT), a user terminal (UT), a subscribe station (SS), a wireless device, a portable device, and the like.

The base station 140 may refer to a station that transmits and receives data and/or control information through communication with the terminal 120 and/or another base station. As an example, the base station 140 may be a Node B, a next generation Node B (gNB), an evolved-Node B (eNB), a base transceiver system (BTS), an access point (AP), and the like.

The satellite 160 may support signal transmission and reception as a medium of a communication path between the terminal 120 and the base station 140. As an example, when the terminal 120 is located in a region with limited coverage of ground infrastructure, such as mountainous regions, open sea, or suburban areas, the terminal 120 and the base station 140 may not be able to transmit or receive a signal by themselves. In this case, the satellite 160 may relay and forward a signal received from the terminal 120 to the base station 140, or may transmit a signal received from the base station 140 to the terminal 120.

Accordingly, a network through which the satellite 160 transmits and receives a signal between the terminal 120 and the base station 140 may referred to as a non-terrestrial network (NTN). The satellite 160 may be a geostationary earth orbit (GEO) satellite, a low earth orbit (LEO) satellite, or a medium earth orbit (MEO) satellite, depending on its orbiting altitude. Furthermore, radio access technology (RAT) utilized by the terminal 120, the base station 140, and the satellite 160 may include Narrowband Internet of Things (NB-IoT) or New Radio (NR). Additionally, a communication link between the terminal 120 and the satellite 160 may be referred to as a service link, and a communication link between the base station 140 and the satellite 160 may be referred to as a feeder link.

The base station 140 may provide information for uplink synchronization to the terminal 120. As an example, as the satellite 160 travels at a high speed at a high altitude, distortions such as a significantly long propagation delay or Doppler shift may occur when transmitting or receiving a signal with the satellite 160. Accordingly, the distortions need to be compensated for in advance in order for the terminal 120 and the base station 140 to communicate seamlessly with the satellite. For this, the base station 140 may transmit system information including information on estimated position and orbit of the satellite 160, information on an estimation model for calculating a communication link delay, or the like, to the terminal 120.

The system information provided by the base station 140 may include a system information block (SIB) as information required for the terminal 120 to access the base station 140. In some implementations, the information on estimated position and orbit of the satellite 160 may include ephemeris information of the satellite 160, and the ephemeris information may be represented as a position and velocity vector, or as an orbit parameter. Information for compensating a propagation delay occurring from the communication link (or the feeder link) between the base station 140 and the satellite 160 may include information on a common timing advance (TA) parameter. In some implementations, each type of information may be referred to by names different from the above description, may be configured in a different form, or may include a different type of information.

Wille the base station 140 and the satellite 160 are illustrated as separate entities in FIG. 1, this is merely an example and the satellite 160 may also perform a role of the base station 140. As an example, the satellite 160 may perform functions of a base station including controlling wireless resources, providing system information, and managing uplink and downlink by communicating with the terminal 120 directly. In such a structure, the satellite 160 itself may operate as an intelligent satellite base station that also performs the role of a base station.

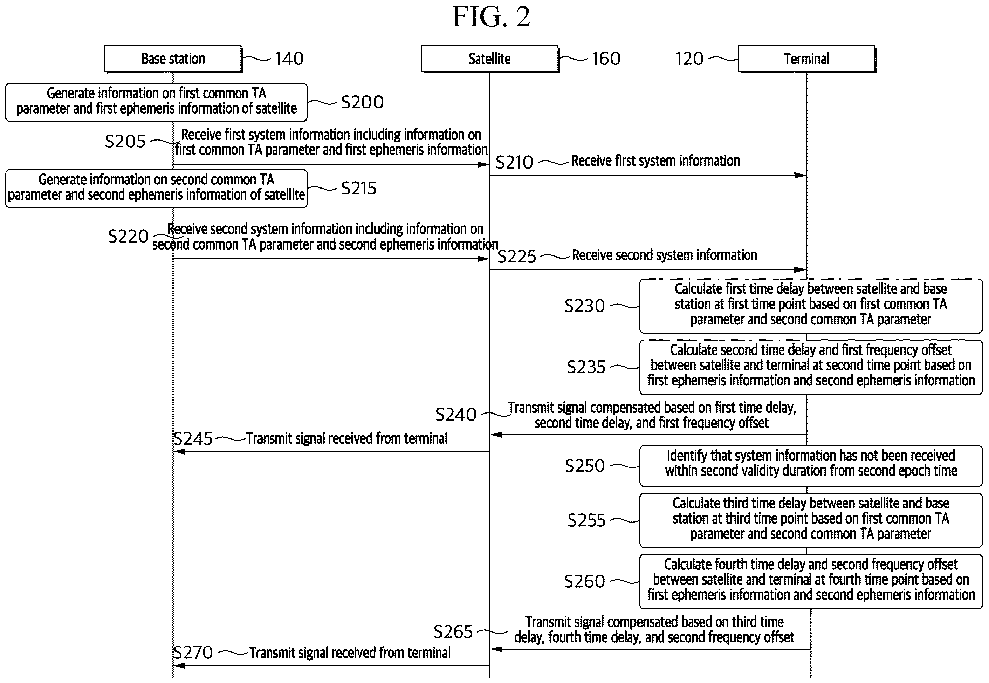

FIG. 2 illustrates a process of the terminal 120 transmitting a signal with compensated time delay and frequency offset according to an example implementation.

In operation 200, the base station 140 may generate information on a first common TA parameter and first ephemeris information of the satellite 160. More specifically, the base station 140 may generate information on the first common TA parameter for estimating a time delay between the satellite 160 and the base station 140, and the first ephemeris information for estimating a position and a velocity of the satellite 160, based on various types of observational data related to the satellite 160. Exemplary observational data includes distance (range) between the base station 140 and the satellite 160, rate of change of the distance, angular measurements of the satellite 160, e.g., azimuth, elevation, and time stamps indicating when data is measured or collected.

As an example, the base station 140 may define a first second-order polynomial model for estimating a time delay between the satellite 160 and the base station 140 from a first reference time (e.g., epoch time) during a first validity duration as shown in equation (1) below, based on various types of observational data related to the satellite 160. Then, the base station 140 may generate information on the first common TA parameter including information on coefficients of the first second-order polynomial model.${τ}_{0} \left(t\right) = {a}_{0} + {a}_{1} \left(t-{t}_{0}\right) + {a}_{2} {\left(t-{t}_{0}\right)}^{2}$ (1)

Here, *t*₀ may denote the first reference time, and *a*₀, *a*₁, and *a*₂ may denote the first common TA parameter, as coefficients of the first second-order polynomial model for estimating a time delay between the satellite 160 and the base station 140 from the first reference time during the first validity duration.

In some implementations, the base station 140 may generate the first ephemeris information including at least one of information on a position vector and a velocity vector of the satellite 160 at the first reference time, and information on an orbit parameter of the satellite 160 at the first reference time, based on various types of observational data related to the satellite 160. According to an example implementation, the information on the position vector and the velocity vector of the satellite 160 may be represented as three-dimensional position vector values (X, Y, and Z) and three-dimensional velocity vector values (Vx, Vy, and Vz) in an Earth-Centered, Earth-Fixed (ECEF) coordinate system that reflects Earth's rotation, and the information on the orbit parameter of the satellite 160 may be represented by semi-major axis, eccentricity, periapsis, longitude, inclination, and mean anomaly in an Earth-Centered Inertial (ECI) coordinate system that does not reflect the Earth's rotation. However, the explicitly described forms of the above-described information are provided by way of example and not limitation, and various types and forms of information other than those described above may be included in the ephemeris information.

In operation S205, the satellite 160 may receive first system information including information on the first common TA parameter and the first ephemeris information from the base station 140. As an example, the base station 140 may transmit the first system information including at least one of the first ephemeris information, information on the first common TA parameter, information on a first slot offset, information on a first validity duration of the first system information, and/or information on the first reference time to the satellite 160.

In some implementations, the first system information may also include various types of information other than the information described above.

In operation S210, the terminal 120 may receive the first system information from the satellite 160. As an example, the satellite 160 may transmit the first system information received from the base station 140 to unspecified terminals within a coverage area using a broadcasting method, and the terminal 120 which is located within the coverage area of the satellite 160 may receive the first system information transmitted by the satellite 160.

In operation S215, the base station 140 may generate information on a second common TA parameter and second ephemeris information of the satellite 160. More specifically, the base station 140 may generate information on the second common TA parameter for estimating a time delay between the satellite 160 and the base station 140, and the second ephemeris information for estimating a position and a velocity of the satellite 160, based on various types of observational data related to the satellite 160. Exemplary observational data includes distance (range) between the base station 140 and the satellite 160, rate of change of the distance, angular measurements of the satellite 160, e.g., azimuth, elevation, and time stamps indicating when data is measured or collected.

As an example, the base station 140 may define a second second-order polynomial model for estimating a time delay between the satellite 160 and the base station 140 from a second reference time during a second validity duration as shown in equation (2) below, based on various types of observational data related to the satellite 160. Then, the base station 140 may generate information on the second common TA parameter including information on coefficients of the second second-order polynomial model.${τ}_{1} \left(t\right) = {b}_{0} + {b}_{1} \left(t-{t}_{1}\right) + {b}_{2} {\left(t-{t}_{1}\right)}^{2}$ (2)

Here, *t*₁ may denote the second reference time, and *b*₀, *b*₁, and *b*₂ may denote the second common TA parameter, as second coefficients of the second second-order polynomial model for estimating a time delay between the satellite 160 and the base station 140 from the second reference time during the second validity duration.

In some implementations, the base station 140 may generate the second ephemeris information including at least one of information on a position vector and a velocity vector of the satellite 160 at the second reference time, and information on an orbit parameter of the satellite 160 at the second reference time, based on various types of observational data related to the satellite 160.

In operation S220, the satellite 160 may receive second system information including information on the second common TA parameter and the second ephemeris information from the base station 140. As an example, the base station 140 may transmit the second system information including at least one of the second ephemeris information, information on the second common TA parameter, information on a second slot offset, information on a second validity duration of the second system information, and/or information on the second reference time to the satellite 160.

In some implementations, the second system information may also include various types of information other than the information described above.

In operation S225, the terminal 120 may receive the second system information from the satellite 160. As an example, the satellite 160 may transmit the second system information received from the base station 140 to unspecified terminals within a coverage area using a broadcasting method, and the terminal 120 which is located within the coverage area of the satellite 160 may receive the second system information transmitted by the satellite 160.

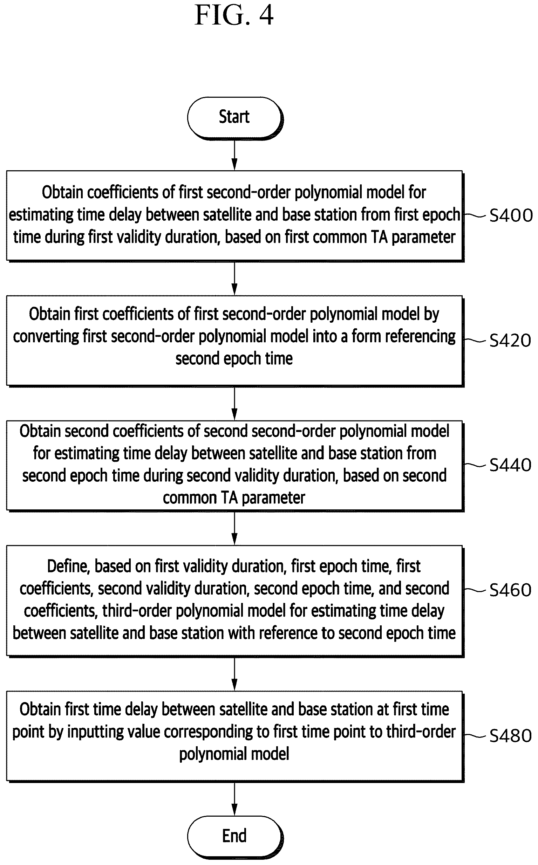

In operation S230, the terminal 120 may calculate a first time delay between the satellite 160 and the base station 140 at a first time point based on the first common TA parameter and the second common TA parameter. As an example, the terminal 120 may define a model for estimating a time delay between the satellite 160 and the base station 140 based on the first validity duration, the first reference time, the first common TA parameter, the second validity duration, the second reference time, and the second common TA parameter, and calculate the first time delay between the satellite 160 and the base station 140 at the first time point based on the defined model. A detailed example of the terminal 120 calculating the first time delay between the satellite 160 and the base station 140 based on the newly defined model will be described in greater detail with reference to FIG. 4. While calculation of the first time delay based on a defined model is described, other methods are possible.

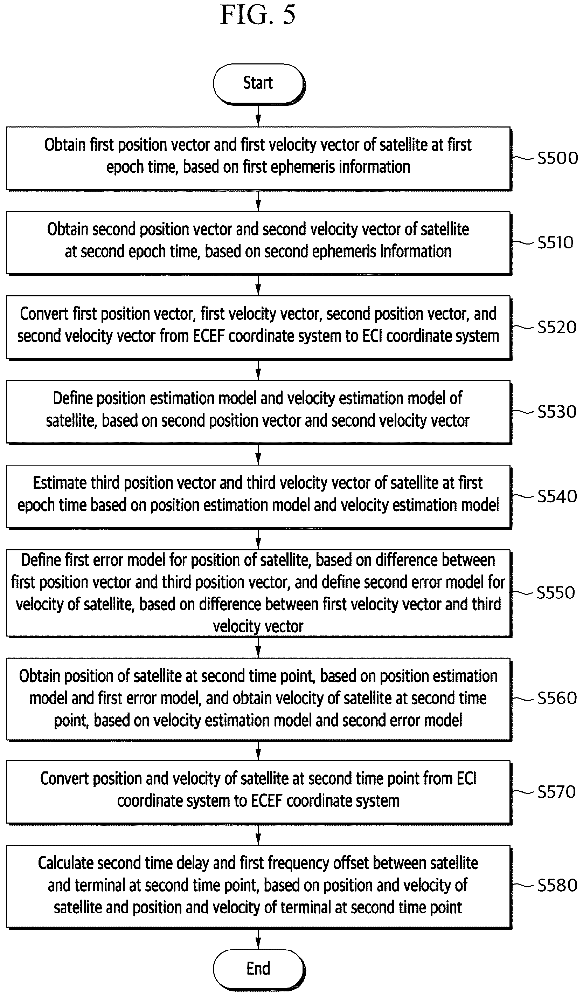

In operation S235, the terminal 120 may calculate a second time delay and a first frequency offset between the satellite 160 and the terminal 120 at a second time point based on the first ephemeris information and the second ephemeris information. As an example, the terminal 120 may define a first error model for a position of the satellite 160 and a second error model for a velocity of the satellite 160 based on a first position vector and a first velocity vector of the satellite 160 at the first reference time and a second position vector and a second velocity vector of the satellite 160 at the second reference time, and calculate the second time delay and the first frequency offset between the satellite 160 and the terminal 120 at the second time point based on the first error model and the second error model. A detailed example of the terminal 120 calculating the second time delay and the first frequency offset based on the newly defined error models will be described in greater detail with reference to FIG. 5. While calculation of the second time delay and first frequency offset based on error models is described, other methods are possible.

While FIG. 2 illustrates terminal 120 performing operation S235 subsequent to operation S230 in FIG. 2, this is merely an example and the terminal 120 may perform operations S230 and S235 in parallel, or perform operation S230 subsequent to operation S235.

In operation S240, the terminal 120 may transmit a signal compensated based on the first time delay, the second time delay, and/or the first frequency offset to the satellite 160. As an example, the terminal 120 may pre-compensate a signal of a frequency that has been corrected based on the first frequency offset by a sum of the first time delay and the second time delay and transmit the signal to the satellite 160.

In operation S245, the satellite 160 may transmit the signal received from the terminal 120 to the base station 140. As an example, upon reception of the signal, the satellite 160 may relay the signal to the base station 140, or transmit the signal subsequent to performing a process for forwarding the signal to the base station 140.

Hereinafter, a description redundant with the aforementioned descriptions related to operations S230 to S245 may be described briefly or omitted.

In operation S250, the terminal 120 may detect that system information has not been received within the second validity duration from the second reference time. As an example, the terminal 120 may detect that the second validity duration has passed from the second reference time without receiving new system information.

In operation S255, the terminal 120 may calculate a third time delay between the satellite 160 and the base station 140 at a third time point based on the first common TA parameter and the second common TA parameter. As an example, the terminal 120 may calculate the third time delay between the satellite 160 and the base station 140 at the third time point based on the model for estimating a time delay between the satellite 160 and the base station 140 defined in operation S230.

In operation S260, the terminal 120 may calculate a fourth time delay and a second frequency offset between the satellite 160 and the terminal 120 at a fourth time point based on the first ephemeris information and the second ephemeris information. As an example, the terminal 120 may calculate the fourth time delay and the second frequency offset between the satellite 160 and the terminal 120 based on the first error model for a position of the satellite 160 and the second error model for a velocity of the satellite 160, defined in operation S235.

While FIG. 2 illustrates the terminal 120 performing operation S260 subsequent to operation S255, this is merely an example and the terminal 120 may perform operations S255 and S260 in parallel, or perform operation S255 subsequent to operation S260.

In operation S265, the terminal 120 may transmit a signal compensated based on the third time delay, the fourth time delay, and the second frequency offset to the satellite 160. As an example, the terminal 120 may pre-compensate a signal of a frequency that has been corrected based on the second frequency offset by a sum of the third time delay and the fourth time delay and transmit the signal to the satellite 160.

In operation S270, the satellite 160 may transmit the signal received from the terminal 120 to the base station 140. As an example, upon reception of the signal from the terminal 120, the satellite 160 may relay the signal to the base station 140, or transmit the signal subsequent to performing a process for forwarding the signal to the base station 140.

Accordingly, even when the terminal 120 does not receive new system information during a validity duration of previously received system information, stable time and frequency synchronization may be maintained by estimating a time delay between the satellite 160 and the base station 140 and a position and a velocity of the satellite 160 based on the newly defined model.

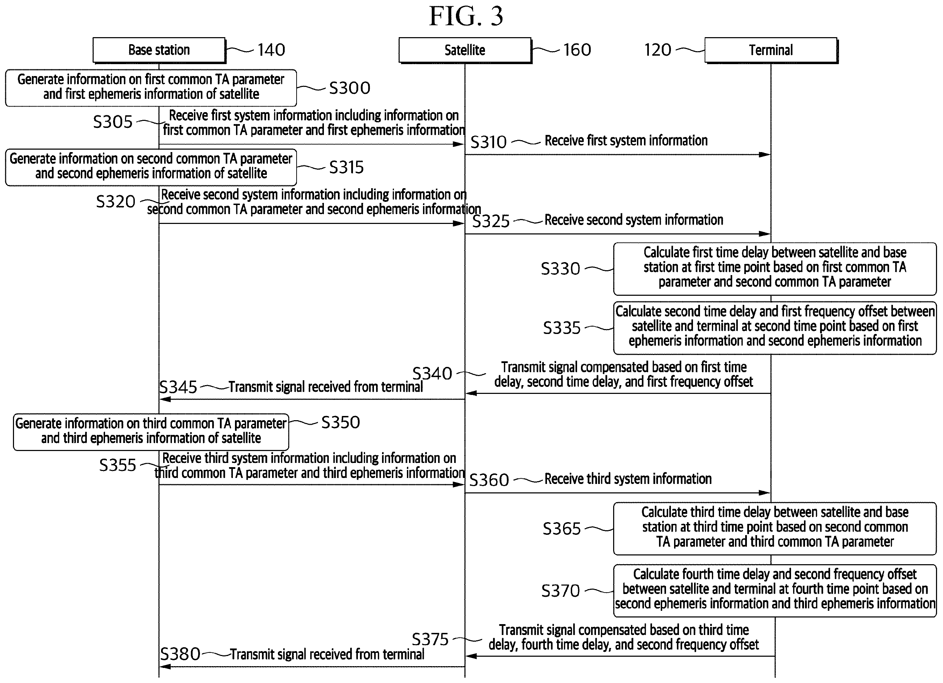

FIG. 3 illustrates a process of the terminal 120 transmitting a signal with compensated time delay and frequency offset according to an example implementation. A description redundant with the aforementioned description with reference to FIG. 2 will be described briefly or omitted.

In operation 300, the base station 140 may generate information on a first common TA parameter and first ephemeris information of the satellite 160. As an example, the base station 140 may generate information on the first common TA parameter for estimating a time delay between the satellite 160 and the base station 140, and the first ephemeris information for estimating a position and a velocity of the satellite 160, based on various types of observational data related to the satellite 160.

In operation S305, the satellite 160 may receive first system information including information on the first common TA parameter and the first ephemeris information from the base station 140. As an example, the base station 140 may transmit the first system information including at least one of the first ephemeris information, information on the first common TA parameter, information on a first slot offset, information on a first validity duration of the first system information, and/or information on a first reference time to the satellite 160.

In operation S310, the terminal 120 may receive the first system information from the satellite 160. As an example, the satellite 160 may transmit the first system information received from the base station 140 to unspecified terminals within a coverage area using a broadcasting method, and the terminal 120 which is located within the coverage area of the satellite 160 may receive the first system information transmitted by the satellite 160.

In operation S315, the base station 140 may generate information on a second common TA parameter and second ephemeris information of the satellite 160. As an example, the base station 140 may generate information on the second common TA parameter for estimating a time delay between the satellite 160 and the base station 140, and the second ephemeris information for estimating a position and a velocity of the satellite 160, based on various types of observational data related to the satellite 160.

In operation S320, the satellite 160 may receive second system information including information on the second common TA parameter and the second ephemeris information from the base station 140. As an example, the base station 140 may transmit the second system information including at least one of the second ephemeris information, information on the second common TA parameter, information on a second slot offset, information on a second validity duration of the second system information, and/or information on a second reference time to the satellite 160.

In operation S325, the terminal 120 may receive the second system information from the satellite 160. As an example, the satellite 160 may transmit the second system information received from the base station 140 to unspecified terminals within a coverage area using a broadcasting method, and the terminal 120 which is located within the coverage area may receive the second system information transmitted by the satellite 160.

In operation S330, the terminal 120 may calculate a first time delay between the satellite 160 and the base station 140 at a first time point based on the first common TA parameter and the second common TA parameter. As an example, the terminal 120 may define a model for estimating a time delay between the satellite 160 and the base station 140 based on the first validity duration, the first reference time, the first common TA parameter, the second validity duration, the second reference time, and the second common TA parameter, and calculate the first time delay between the satellite 160 and the base station 140 at the first time point based on the defined model. A detailed example of the terminal 120 calculating the first time delay between the satellite 160 and the base station 140 based on the newly defined model will be described in greater detail with reference to FIG. 4. While calculation of the first time delay based on a defined model is described, other methods are possible.

In operation S335, the terminal 120 may calculate a second time delay and a first frequency offset between the satellite 160 and the terminal 120 at a second time point based on the first ephemeris information and the second ephemeris information. As an example, the terminal 120 may define a first error model for a position of the satellite 160 and a second error model for a velocity of the satellite 160 based on a first position vector and a first velocity vector of the satellite 160 at the first reference time and a second position vector and a second velocity vector of the satellite 160 at the second reference time, and calculate the second time delay and the first frequency offset between the satellite 160 and the terminal 120 at the second time point based on the first error model and the second error model. A detailed example of the terminal 120 calculating the second time delay and the first frequency offset based on the newly defined error models will be described in greater detail with reference to FIG. 5. While calculation of the second time delay and first frequency offset based on error models is described, other methods are possible.

While FIG. 3 illustrates the terminal 120 performing operation S335 subsequent to operation S330, this is merely an example and the terminal 120 may perform operations S330 and S335 in parallel, or perform operation S330 subsequent to operation S335.

In operation S340, the terminal 120 may transmit a signal compensated based on the first time delay, the second time delay, and/or the first frequency offset to the satellite 160. As an example, the terminal 120 may pre-compensate a signal of a frequency that has been corrected based on the first frequency offset by a sum of the first time delay and the second time delay, and send the signal to the satellite 160.

In operation S345, the satellite 160 may transmit the signal received from the terminal 120 to the base station 140. As an example, upon reception of the signal from the terminal 120, the satellite 160 may relay the signal to the base station 140, or transmit the signal subsequent to performing a process for forwarding the signal to the base station 140.

In operation S350, the base station 140 may generate information on a third common TA parameter and third ephemeris information of the satellite 160. As an example, the base station 140 may generate information on the third common TA parameter for estimating a time delay between the satellite 160 and the base station 140, and the third ephemeris information for estimating a position and a velocity of the satellite 160, based on various types of observational data related to the satellite 160.

In operation S355, the satellite 160 may receive third system information including information on the third common TA parameter and the third ephemeris information from the base station 140. As an example, the base station 140 may transmit the third system information including at least one of the third ephemeris information, information on the third common TA parameter, information on a third slot offset, information on a third validity duration of the third system information, and information on a third reference time to the satellite 160.

In operation S360, the terminal 120 may receive the third system information from the satellite 160. As an example, the satellite 160 may transmit the third system information received from the base station 140 to unspecified terminals within a coverage area using a broadcasting method, and the terminal 120 which is located within the coverage area of the satellite 160 may receive the third system information transmitted by the satellite 160.

In operation S365, the terminal 120 may calculate a third time delay between the satellite 160 and the base station 140 at a third time point based on the second common TA parameter and the third common TA parameter. As an example, the terminal 120 may define a model for estimating a time delay between the satellite 160 and the base station 140 based on the second validity duration, the second reference time, the second common TA parameter, the third validity duration, the third reference time, and the third common TA parameter, and calculate the third time delay between the satellite 160 and the base station 140 at the third time point based on the defined model.

In operation S370, the terminal 120 may calculate a fourth time delay and a second frequency offset between the satellite 160 and the terminal 120 at a fourth time point based on the second ephemeris information and the third ephemeris information. As an example, the terminal 120 may define a third error model for a position of the satellite 160 and a fourth error model for a velocity of the satellite 160 based on the second position vector and the second velocity vector of the satellite 160 at the second reference time, and a third position vector and a third velocity vector of the satellite 160 at the third reference time, and calculate the fourth time delay and the second frequency offset between the satellite 160 and the terminal 120 at the fourth time point based on the third error model and the fourth error model.

While FIG. 3 illustrates the terminal 120 performing operation S370 subsequent to operation S365, this is merely an example and the terminal 120 may perform operations S365 and S370 in parallel, or perform operation S365 subsequent to operation S370.

In operation S375, the terminal 120 may transmit a signal compensated based on the third time delay, the fourth time delay, and the second frequency offset to the satellite 160. As an example, the terminal 120 may pre-compensate a signal of a frequency that has been corrected based on the second frequency offset by a sum of the third time delay and the fourth time delay, and send the signal to the satellite 160.

In operation S380, the satellite 160 may transmit the signal received from the terminal 120 to the base station 140. As an example, upon reception of the signal from the terminal 120, the satellite 160 may relay the signal to the base station 140, or transmit the signal subsequent to performing a process for forwarding the signal to the base station 140.

FIG. 4 illustrates a process of the terminal 120 calculating a time delay between the satellite 160 and the base station 140 based on a newly defined model according to an example implementation. As an example, the flowchart of FIG. 4 illustrates an example of operation S230 of FIG. 2, or operation S330 of FIG. 3. As described above with reference to FIG. 2 or FIG. 3, a time delay between the satellite 160 and the base station 140 may be calculated using a method shown in FIG. 4.

In operation S400, the terminal 120 may obtain coefficients (e.g., first coefficients) of the first second-order polynomial model for estimating a time delay between the satellite 160 and the base station 140 from the first reference time during the first validity duration, based on the first common TA parameter. As an example, the terminal 120 may obtain information on the first common TA parameter from the first system information received from the satellite 160 and extract the coefficients of the first second-order polynomial model from the information on the first common TA parameter.

In operation S420 (or as part of operation S400), the terminal 120 may obtain first coefficients of the first second-order polynomial model by converting the first second-order polynomial model into a form referencing the second reference time. As an example, the terminal 120 may convert the first second-order polynomial model which is in the form of equation (1) into a form such as equation (3) below referencing the second reference time. For example, the first coefficients of the first second-order polynomial model referencing the second reference time may be obtained by inputting coefficients of the first second-order polynomial model referencing the first reference time to equations (4) to (6) below.${τ}_{0} \left(t\right) = {a}_{0} ′ + {a}_{1} ′ \left(t-{t}_{1}\right) + {a}_{2} ′ {\left(t-{t}_{1}\right)}^{2}$ (3) ${a}_{2} ′ = {a}_{2}$ (4) ${a}_{1} ′ = {a}_{1} + 2 {a}_{2} \left({t}_{1}-{t}_{0}\right)$ (5) ${a}_{0} ′ = {a}_{0} + {a}_{1} \left({t}_{1}-{t}_{0}\right) + {a}_{2} {\left({t}_{1}-{t}_{0}\right)}^{2}$ (6)

Here, *t*₀ may denote the first reference time, and *t*₁ may denote the second reference time. Additionally, *a*₀, *a*₁, and *a*₂ may denote the first common TA parameter, as coefficients of the first second-order polynomial model referencing the first reference time, and *a*₀', *a*₁', and ${a}_{2}^{′}$ may denote the first coefficients of the first second-order polynomial model referencing the second reference time.

Accordingly, as the terminal 120 converts the first second-order polynomial model into a form referencing the second reference time, the amount of computation the terminal 120 is required to perform in a subsequent operation may be reduced significantly.

In operation S440, the terminal 120 may obtain second coefficients of the second second-order polynomial model for estimating a time delay between the satellite 160 and the base station 140 from the second reference time during the second validity duration, based on the second common TA parameter. As an example, the terminal 120 may obtain information on the second common TA parameter from the second system information received from the satellite 160 and extract the second coefficients of the second second-order polynomial model from the information on the second common TA parameter.

In operation S460, the terminal 120 may define, based on the first validity duration, the first reference time, the first coefficients, the second validity duration, the second reference time, and the second coefficients, a third-order polynomial model for estimating a time delay between the satellite 160 and the base station 140 with reference to the second reference time. More specifically, the third-order polynomial model may be defined, based on the first validity duration, the first reference time, the first coefficients, the second validity duration, the second reference time, and the second coefficients, by calculating third coefficients of the third-order polynomial model for estimating a time delay between the satellite 160 and the base station 140 with reference to the second reference time.

As an example, the terminal 120 may calculate, based on the first validity duration, the first reference time, the first coefficients, the second validity duration, the second reference time, and the second coefficients, third coefficients of the third-order polynomial model for estimating a time delay between the satellite 160 and the base station 140 with reference to the second reference time as shown in equation (7) through equation (14) below. Accordingly, the terminal 120 may define the third-order polynomial model for estimating a time delay between the satellite 160 and the base station 140 with reference to the second reference time as shown in equation (15) below. $\begin{matrix}\left[\begin{matrix}{c}_{0} \\ {c}_{1} \\ {c}_{2} \\ {c}_{3}\end{matrix}\right] = \\ {\left[\begin{matrix}{x}_{0} + {y}_{0} & {x}_{1} + {y}_{1} & {x}_{2} + {y}_{2} & {x}_{3} + {y}_{3} \\ {x}_{1} + {y}_{1} & {x}_{2} + {y}_{2} & {x}_{3} + {y}_{3} & {x}_{4} + {y}_{4} \\ {x}_{2} + {y}_{2} & {x}_{3} + {y}_{3} & {x}_{4} + {y}_{4} & {x}_{5} + {y}_{5} \\ {x}_{3} + {y}_{3} & {x}_{4} + {y}_{4} & {x}_{5} + {y}_{5} & {x}_{6} + {y}_{6}\end{matrix}\right]}^{- 1} \left[\begin{matrix}{a}_{0} ′ {x}_{0} + {a}_{1} ′ {x}_{1} + {a}_{2} ′ {x}_{2} + {b}_{0} {y}_{0} + {b}_{1} {y}_{1} + {b}_{2} {y}_{2} \\ {a}_{0} ′ {x}_{1} + {a}_{1} ′ {x}_{2} + {a}_{2} ′ {x}_{3} + {b}_{0} {y}_{1} + {b}_{1} {y}_{2} + {b}_{2} {y}_{3} \\ {a}_{0} ′ {x}_{2} + {a}_{1} ′ {x}_{3} + {a}_{2} ′ {x}_{4} + {b}_{0} {y}_{2} + {b}_{1} {y}_{3} + {b}_{2} {y}_{4} \\ {a}_{0} ′ {x}_{3} + {a}_{1} ′ {x}_{4} + {a}_{2} ′ {x}_{5} + {b}_{0} {y}_{3} + {b}_{1} {y}_{4} + {b}_{2} {y}_{5}\end{matrix}\right]\end{matrix}$ (7) ${x}_{0} = 2 {T}_{0} , {y}_{0} = 2 {T}_{1}$ (8) ${x}_{1} = {\left({t}_{0}+{T}_{0}-{t}_{1}\right)}^{2} - {\left({t}_{0}-{t}_{1}\right)}^{2} , {y}_{1} = {{T}_{1}}^{2}$ (9) ${x}_{2} = \frac{2}{3} \left[{\left({t}_{0}+{T}_{0}-{t}_{1}\right)}^{3}-{\left({t}_{0}-{t}_{1}\right)}^{3}\right] , {y}_{2} = \frac{2}{3} {{T}_{1}}^{3}$ (10) ${x}_{3} = \frac{1}{2} \left[{\left({t}_{0}+{T}_{0}-{t}_{1}\right)}^{4}-{\left({t}_{0}-{t}_{1}\right)}^{4}\right] , {y}_{3} = \frac{1}{2} {{T}_{1}}^{4}$ (11) ${x}_{4} = \frac{2}{5} \left[{\left({t}_{0}+{T}_{0}-{t}_{1}\right)}^{5}-{\left({t}_{0}-{t}_{1}\right)}^{5}\right] , {y}_{4} = \frac{2}{5} {{T}_{1}}^{5}$ (12) ${x}_{5} = \frac{1}{3} \left[{\left({t}_{0}+{T}_{0}-{t}_{1}\right)}^{6}-{\left({t}_{0}-{t}_{1}\right)}^{6}\right] , {y}_{5} = \frac{1}{3} {{T}_{1}}^{6}$ (13) ${x}_{6} = \frac{2}{7} \left[{\left({t}_{0}+{T}_{0}-{t}_{1}\right)}^{7}-{\left({t}_{0}-{t}_{1}\right)}^{7}\right] , {y}_{6} = \frac{2}{7} {{T}_{1}}^{7}$ (14) ${τ}_{2} \left(t\right) = {c}_{0} + {c}_{1} \left(t-{t}_{1}\right) + {c}_{2} {\left(t-{t}_{1}\right)}^{2} + {c}_{3} {\left(t-{t}_{1}\right)}^{3}$ (15)

Here, *t*₀ may denote the first reference time, *t*₁ may denote the second reference time, *T*₀ may denote the first validity duration, and *T*₁ may denote the second validity duration. In some implementations, *a*₀', *a*₁', and ${a}_{2}^{′}$ may denote the first coefficients of the first second-order polynomial model referencing the second reference time, and *b*₀, *b*₁, and *b*₂ may denote the second coefficients of the second second-order polynomial model.

According to an example implementation, the third coefficients of the third-order polynomial model may include a value that minimizes an error between the third-order polynomial model, and the first second-order polynomial model and the second second-order polynomial model. More specifically, the third coefficients may include a value that minimizes a sum of a magnitude of a difference between a time delay according to the third-order polynomial model and a time delay according to the first second-order polynomial model during a time period from the first reference time to a time beyond the first validity duration, and a magnitude of a difference between a time delay according to the third-order polynomial model and a time delay according to the second second-order polynomial model during a time period from the second reference time to a time beyond the second validity duration.

As an example, the third coefficients may include a value that returns a value obtained by differentiating the least square error function, that indicates an error between the third-order polynomial model, and the first second-order polynomial model and the second second-order polynomial model as shown in equation (16) below, by each of the third coefficients into zero, as shown in equation (17) below.$E = {\int }_{{t}_{0}}^{{t}_{0} + {T}_{0}} {\left({τ}_{2}\left(t\right)-{τ}_{0}\left(t\right)\right)}^{2} + {\int }_{{t}_{1}}^{{t}_{1} + {T}_{1}} {\left({τ}_{2}\left(t\right)-{τ}_{1}\left(t\right)\right)}^{2}$ (16) $\frac{\partial E}{\partial {c}_{0}} = 0 , \frac{\partial E}{\partial {c}_{1}} = 0 , \frac{\partial E}{\partial {c}_{2}} = 0 , \frac{\partial E}{\partial {c}_{3}} = 0$ (17)

Here, *τ*₀(*t*), *τ*₁(*t*), and *τ*₂(*t*) may denote the first second-order polynomial model, the second second-order polynomial model, and the third-order polynomial model, respectively, and *c*₀, *c*₁, *c*₂, and *c*₃ may denote the third coefficients of the third-order polynomial model. Additionally, *t*₀ may denote the first reference time, *t*₁ may denote the second reference time, *T*₀ may denote the first validity duration, and *T*₁ may denote the second validity duration.

In operation S480, the terminal 120 may obtain a first time delay between the satellite 160 and the base station 140 at a first time point by inputting a value corresponding to the first time point to the third-order polynomial model. More specifically, the terminal 120 may calculate the first time delay by taking a combination of a time point of estimating a time delay and a communication path subject for the time delay estimation into consideration in various ways.

As an example, the terminal 120 may calculate a time required for the satellite 160 to receive the system information transmitted by the base station 140, by inputting a value corresponding to a time point at which the satellite 160 received the system information to the third-order polynomial model, calculate a time expected to be required for the base station 140 to receive a signal to be transmitted by the satellite 160, by inputting a value corresponding to a time point at which the satellite 160 may transmit the signal to the third-order polynomial model, and determine a sum of the two calculated times as the first time delay.

As another example, the terminal 120 may calculate a time required for the satellite 160 to receive the system information transmitted by the base station 140, by inputting a value corresponding to a time point at which the base station 140 transmitted the system information to the third-order polynomial model, calculate a time expected to be required for the base station 140 to receive a signal to be transmitted by the satellite 160, by inputting a value corresponding to a time point at which the base station 140 may receive the signal to the third-order polynomial model, and determine a sum of the two calculated times as the first time delay.

As still another example, the terminal 120 may calculate a time expected to be required for the base station 140 to receive a signal to be transmitted by the satellite 160, by inputting a value corresponding to a time point at which the satellite 160 may transmit the signal to the third-order polynomial model, and determine twice the calculated time as the first time delay.

In some implementations, the method for the terminal 120 to calculate a time delay for pre-compensation is not limited to the description above, and various other methods may also be implemented.

Accordingly, the terminal 120 may enhance estimation accuracy and/or extend a period during which the estimation accuracy is assured, by newly defining a model for estimating a time delay between the satellite 160 and the base station 140 from the second-order polynomial model to the third-order polynomial model. Especially, by significantly reducing estimation errors that may occur when a validity duration of system information passes, additional time for maintaining uplink synchronization without obtaining new system information may be secured.

FIG. 5 illustrates a process of the terminal 120 calculating a time delay and a frequency offset between the satellite 160 and the terminal 120 based on a newly defined model. As an example, the flowchart of FIG. 5 illustrates an example of operation S235 of FIG. 2, or operation S335 of FIG. 3. As described above with reference to FIG. 2 or FIG. 3, a time delay and a frequency offset between the satellite 160 and the terminal 120 may be calculated using a method shown in FIG. 5.

In operation S500, the terminal 120 may obtain a first position vector and a first velocity vector of the satellite 160 at the first reference time based on the first ephemeris information. More specifically, the terminal 120 may obtain the first ephemeris information from the first system information received from the satellite 160 and obtain the first position vector and the first velocity vector of the satellite 160 at the first reference time from the first ephemeris information. According to an example implementation, the terminal 120 may perform an additional process of converting information in a three-dimensional vector form into an orbit parameter form depending on the form of information the first ephemeris information includes.

As an example, when the first ephemeris information includes information on the first position vector and the first velocity vector of the satellite 160, the terminal 120 may obtain the first ephemeris information from the first system information received from the satellite 160 and extract the first position vector ${{r}^{⇀}}_{0} \left({t}_{0}\right)$ and the first velocity vector ${{v}^{⇀}}_{0} \left({t}_{0}\right)$ of the satellite 160 at the first reference time from the first ephemeris information.

As another example, when the first ephemeris information includes information on an orbit parameter of the satellite 160, the terminal 120 may obtain the first ephemeris information from the first system information received from the satellite 160 and extract the information on the orbit parameter of the satellite 160. Then, the terminal 120 may convert the information on the orbit parameter of the satellite 160 into the first position vector ${{r}^{⇀}}_{0} \left({t}_{0}\right)$ and the first velocity vector ${{v}^{⇀}}_{0} \left({t}_{0}\right)$ of the satellite 160 at the first reference time.

In operation S510, the terminal 120 may obtain a second position vector and a second velocity vector of the satellite 160 at the second reference time based on the second ephemeris information. More specifically, the terminal 120 may obtain the second ephemeris information from the second system information received from the satellite 160 and obtain the second position vector and the second velocity vector of the satellite 160 at the second reference time from the second ephemeris information. According to an example implementation, the terminal 120 may perform an additional process of converting information in a three-dimensional vector form into an orbit parameter form, depending on the form of information the second ephemeris information includes.

As an example, when the second ephemeris information includes information on the second position vector and the second velocity vector of the satellite 160, the terminal 120 may obtain the second ephemeris information from the second system information received from the satellite 160 and extract the second position vector ${{r}_{1}}^{⇀} \left({t}_{1}\right)$ and the second velocity vector ${{v}_{1}}^{⇀} \left({t}_{1}\right)$ of the satellite 160 at the second reference time from the second ephemeris information.

As another example, when the second ephemeris information includes information on an orbit parameter of the satellite 160, the terminal 120 may obtain the second ephemeris information from the second system information received from the satellite 160 and extract the information on the orbit parameter of the satellite 160. Then, the terminal 120 may convert the information on the orbit parameter of the satellite 160 into the second position vector ${{r}_{1}}^{⇀} \left({t}_{1}\right)$ and the second velocity vector ${{v}_{1}}^{⇀} \left({t}_{1}\right)$ of the satellite 160 at the second reference time.

In operation S520, the terminal 120 may convert the first position vector, the first velocity vector, the second position vector, and the second velocity vector from the ECEF coordinate system to the ECI coordinate system. As an example, the terminal 120 may apply equation (18) through equation (20) below to the first position vector, the first velocity vector, the second position vector, and the second velocity vector, and obtain the first position vector, the first velocity vector, the second position vector, and the second velocity vector in the ECI coordinate system.${{r}_{ECEF}}^{⇀} = R \left(t-{t}_{0}\right) {{r}_{ECI}}^{⇀}$ (18) ${{v}_{ECEF}}^{⇀} = R \left(t-{t}_{0}\right) {{v}_{ECI}}^{⇀} - {{w}_{Earth}}^{⇀} \times {{r}_{ECEF}}^{⇀}$ (19) $R \left(t\right) = \left[\begin{matrix}cos \left[{w}_{Earth} t\right] & sin \left[{w}_{Earth} t\right] & 0 \\ - sin \left[{w}_{Earth} t\right] & cos \left[{w}_{Earth} t\right] & 0 \\ 0 & 0 & 1\end{matrix}\right] {{w}_{Earth}}^{⇀} = \left[\begin{matrix}0 \\ 0 \\ {w}_{Earth}\end{matrix}\right]$ (20)

Here, ${{r}_{ECEF}}^{⇀}$ and ${{v}_{ECEF}}^{⇀}$ may denote a three-dimensional position vector and velocity vector, respectively, in the ECEF coordinate system, and ${{r}_{ECI}}^{⇀}$ and ${{v}_{ECI}}^{⇀}$ may denote a three-dimensional position vector and velocity vector, respectively, in the ECI coordinate system. In some implementations, *w_{Earth}* may denote an angular velocity of Earth's rotation, expressed in 7.292115 · 10⁻⁵ radians per second (radian/sec).

In operation S530, the terminal 120 may define a position estimation model and a velocity estimation model of the satellite 160 based on the second position vector and the second velocity vector. As an example, the terminal 120 may define a model ${{r}_{1}}^{⇀} \left(t\right)$ (e.g., the position estimation model) for estimating a position of the satellite 160 and a model ${{v}_{1}}^{⇀} \left(t\right)$ (e.g., the velocity estimation model) for estimating a velocity of the satellite 160, based on the second position vector ${{r}_{1}}^{⇀} \left({t}_{1}\right)$ and the second velocity vector ${{v}_{1}}^{⇀} \left({t}_{1}\right)$ of the satellite 160 at the second reference time. According to an example implementation, the position estimation model and the velocity estimation model of the satellite 160 may include various models such as the Keplerian orbit model and the precise orbit determination (POD) model.

In operation S540, the terminal 120 may estimate a third position vector and a third velocity vector of the satellite 160 at the first reference time based on the position estimation model and the velocity estimation model. As an example, the terminal 120 may obtain the third position vector ${{r}_{1}}^{⇀} \left({t}_{0}\right)$ of the satellite 160 at the first reference time by inputting a value corresponding to the first reference time to the position estimation model, and may obtain the third velocity vector ${{v}_{1}}^{⇀} \left({t}_{0}\right)$ of the satellite 160 at the first reference time by inputting a value corresponding to the first reference time to the velocity estimation model.

In operation S550, the terminal 120 may define a first error model for a position of the satellite 160 based on a difference between the first position vector and the third position vector, and a second error model for a velocity of the satellite 160 based on a difference between the first velocity vector and the third velocity vector. As an example, the terminal 120 may calculate a difference $Δ {r}^{⇀} \left({t}_{0}\right)$ between the first position vector and the third position vector, and a difference $Δ {v}^{⇀} \left({t}_{0}\right)$ between the first velocity vector and the third velocity vector, as shown in equation (21) and equation (22) below. Then, the terminal 120 may define the first error model ${{e}^{⇀}}_{r} \left(t\right)$ for a position of the satellite 160 and the second error model ${{e}^{⇀}}_{v} \left(t\right)$ for a velocity of the satellite 160 as shown in equation (23) and equation (24) below, based on the difference between the first position vector and the third position vector, and the difference between the first velocity vector and the third velocity vector. According to an example implementation, the first error model for a position of the satellite 160 and the second error model for a velocity of the satellite 160 may be determined depending a modeling method for the position estimation model and the velocity estimation model.$Δ {r}^{⇀} \left({t}_{0}\right) = {{r}_{0}}^{⇀} \left({t}_{0}\right) - {{r}_{1}}^{⇀} \left({t}_{0}\right)$ (21) $Δ {v}^{⇀} \left({t}_{0}\right) = {{v}_{0}}^{⇀} \left({t}_{0}\right) - {{v}_{1}}^{⇀} \left({t}_{0}\right)$ (22) ${{e}^{⇀}}_{r} \left(t\right) = {a}^{⇀} {\left(t-{t}_{1}\right)}^{2} {a}^{⇀} = \frac{Δ {r}^{⇀} \left({t}_{0}\right)}{{\left({t}_{0}-{t}_{1}\right)}^{2}}$ (23) ${{e}^{⇀}}_{v} \left(t\right) = {b}^{⇀} \left(t-{t}_{1}\right) {b}^{⇀} = \frac{Δ {v}^{⇀} \left({t}_{0}\right)}{{t}_{0} - {t}_{1}}$ (24)

Here, *t*₀ may denote the first reference time, and *t*₁ may denote the second reference time. In some implementations, ${{r}^{⇀}}_{0} \left({t}_{0}\right)$ and ${{v}^{⇀}}_{0} \left({t}_{0}\right)$ may denote the first position vector and the first velocity vector, respectively, of the satellite 160 at the first reference time, and ${{r}_{1}}^{⇀} \left({t}_{0}\right)$ and ${{v}_{1}}^{⇀} \left({t}_{0}\right)$ may denote the third position vector and the third velocity vector, respectively, of the satellite 160 at the first reference time, estimated via the position estimation model and the velocity estimation model.

In operation S560, the terminal 120 may obtain a position of the satellite 160 at a second time point based on the position estimation model and the first error model, and may obtain a velocity of the satellite 160 at the second time point based on the velocity estimation model and the second error model. As an example, the terminal 120 may define a final position estimation model ${r}^{⇀} \left(t\right)$ of the satellite 160 based on a sum of the position estimation model and the first error model of the satellite 160 as shown in equation (25) below, and may define a final velocity estimation model ${v}^{⇀} \left(t\right)$ of the satellite 160 based on a sum of the velocity estimation model and the second error model of the satellite 160 as shown in equation (26) below. Then, the terminal 120 may obtain the position of the satellite 160 at the second time point by inputting a value corresponding to the second time point to the final position estimation model of the satellite 160 and obtain the velocity of the satellite 160 at the second time point by inputting a value corresponding to the second time point to the final velocity estimation model of the satellite 160.${r}^{⇀} \left(t\right) = {{r}_{1}}^{⇀} \left(t\right) + {{e}^{⇀}}_{r} \left(t\right)$ (25) ${v}^{⇀} \left(t\right) = {{v}_{1}}^{⇀} \left(t\right) + {{e}^{⇀}}_{v} \left(t\right)$ (26)

In operation S570, the terminal 120 may convert the position and the velocity of the satellite 160 at the second time point from the ECI coordinate system to the ECEF coordinate system. As an example, the terminal 120 may obtain the position and the velocity of the satellite 160 at the second time point in the ECEF coordinate system by applying equation (18) through equation (20) to the position and the velocity of the satellite 160 at the second time point.

In operation S580, the terminal 120 may calculate a second time delay and a first frequency offset between the satellite 160 and the terminal 120 at the second time point based on the position and the velocity of the satellite 160 at the second time point and a position and a velocity of the terminal 120 at the second time point. More specifically, the terminal 120 may calculate the second time delay and the first frequency offset by taking a combination of a time point for estimating a position vector and a velocity vector of the satellite 160 and a communication path which is subject for the time delay estimation into a consideration in various ways.

As an example, the terminal 120 may calculate a time required for the terminal 120 to receive the system information transmitted by the satellite 160 based on a position vector and a velocity vector of the satellite 160 and a position of the terminal 120 at a time point at which the satellite 160 transmitted the system information, calculate a time expected to be required for the satellite 160 to receive a signal to be transmitted by the terminal 120 based on a position vector and a velocity vector of the satellite 160 and a position of the terminal 120 at a time point at which the satellite 160 may receive the signal, and determine a sum of the two calculated times as the second time delay. Moreover, the terminal 120 may determine Doppler frequency offset that may occur according to a relative velocity between the terminal 120 and the satellite 160 as the first frequency offset, based on a velocity vector of the satellite 160 and a velocity of the terminal 120 at a time point the satellite 160 may receive the signal.

As another example, the terminal 120 may calculate a time required for the terminal 120 to receive the system information transmitted by the satellite 160 based on a position vector and a velocity vector of the satellite 160 and a position of the terminal 120 at a time point at which the satellite 160 transmitted the system information, calculate a time expected to be required for the satellite 160 to receive a signal to be transmitted by the terminal 120 based on a position vector and a velocity vector of the satellite 160 and a position of the terminal 120 at a time point at which the terminal 120 may transmit the signal, and determine a sum of the two calculated times as the second time delay. Moreover, the terminal 120 may determine Doppler frequency offset that may occur depending on a relative velocity between the terminal 120 and the satellite 160 as the first frequency offset, based on a velocity vector of the satellite 160 and a velocity of the terminal 120 at a time point at which the satellite 160 may receive the signal.

As still another example, the terminal 120 may calculate a time expected to be required for the satellite 160 to receive a signal to be transmitted by the terminal 120 based on a position vector and a velocity vector of the satellite 160 and a position of the terminal 120 at a time point at which the terminal 120 may transmit the signal, and determine twice the calculated time as the second time delay. Moreover, the terminal 120 may determine Doppler frequency offset that may occur depending on a relative velocity between the terminal 120 and the satellite 160 as the first frequency offset, based on a velocity vector of the satellite 160 and a velocity of the terminal 120 at a time point at which the terminal 120 may transmit the signal.

In some implementations, the method for the terminal 120 to calculate a time delay and a frequency offset for pre-compensation is not limited to the above description, and various other methods may also be implemented.

Accordingly, the terminal 120 may enhance estimation accuracy and/or extend a time period during which the estimation accuracy is assured, by newly defining an error model (or error models) for estimating a position and a velocity of the satellite 160. Especially, by significantly reducing estimation errors that may occur when a validity duration of system information passes, additional time for maintaining uplink synchronization without obtaining new system information may be secured.

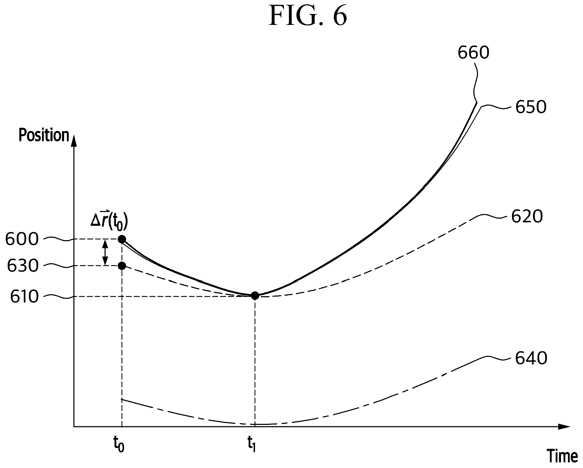

FIG. 6 is a diagram for describing a process of the terminal 120 estimating a position of the satellite 160 according to an example implementation. A description redundant with the above descriptions with reference to FIGS. 2 and 5 will be described briefly or omitted.

The terminal 120 may obtain a first position vector of the satellite 160 at a first reference time based on first ephemeris information. As an example, with reference to FIG. 6, the terminal 120 may obtain first ephemeris information from first system information received from the satellite 160 and extract a first position vector ${{r}^{⇀}}_{0} \left({t}_{0}\right)$ 600 of the satellite 160 at a first reference time *t*₀ from the first ephemeris information.

The terminal 120 may obtain a second position vector of the satellite 160 at a second reference time based on second ephemeris information. As an example, with reference to FIG. 6, the terminal 120 may obtain second ephemeris information from second system information received from the satellite 160 and extract a second position vector ${{r}_{1}}^{⇀} \left({t}_{1}\right)$ 610 of the satellite 160 at a second reference time *t*₁ from the second ephemeris information.

The terminal 120 may define a position estimation model for the satellite 160 based on the second position vector. As an example, with reference to FIG. 6, the terminal 120 may define a position estimation model ${{r}_{1}}^{⇀} \left(t\right)$ 620 for estimating a position of the of the satellite 160 based on the second position vector ${{r}_{1}}^{⇀} \left({t}_{1}\right)$ 610 of the satellite 160 at the second reference time *t*₁.

The terminal 120 may calculate a third position vector of the satellite 160 at the first reference time based on the position estimation model. As an example, with reference to FIG. 6, the terminal 120 may obtain a third position vector ${{r}_{1}}^{⇀} \left({t}_{0}\right)$ 630 of the satellite 160 at the first reference time *t*₀ by inputting a value corresponding to the first reference time *t*₀ to the position estimation model ${{r}_{1}}^{⇀} \left(t\right)$ 620.

The terminal 120 may define an error model for a position of the satellite 160 based on a difference between the first position vector and the third position vector. As an example, with reference to FIG. 6, the terminal 120 may calculate a difference $Δ {r}^{⇀} \left({t}_{0}\right)$ between the first position vector ${{r}^{⇀}}_{0} \left({t}_{0}\right)$ 600 and the third position vector ${{r}_{1}}^{⇀} \left({t}_{0}\right)$ 630, and define an error model ${{e}^{⇀}}_{r} \left(t\right)$ 640 for the position of the satellite 160 based on the difference $Δ {r}^{⇀} \left({t}_{0}\right)$.

The terminal 120 may define a final position estimation model of the satellite 160 based on the position estimation model and the error model of the satellite 160. As an example, with reference to FIG. 6, the terminal 120 may determine a sum of the position estimation model ${{r}_{1}}^{⇀} \left(t\right)$ 620 of the satellite 160 and the error model ${{e}^{⇀}}_{r} \left(t\right)$ 640 as a final position estimation model ${r}^{⇀} \left(t\right)$ 650.

The terminal 120 may estimate a position of the satellite 160 at a second time point based on the final position estimation model. As an example, the terminal 120 may obtain a position of the satellite 160 at the second time point by inputting a value corresponding to the second time point to the final position estimation model ${r}^{⇀} \left(t\right)$ 650 of the satellite 160.

Accordingly, estimation accuracy may be enhanced by the terminal 120 newly defining an error model for estimating a position of the satellite 160 based on an actual position of the satellite 160 at two time points. This, with reference to FIG. 6, may be confirmed through a small difference between an actual position 660 of the satellite 160 and the final position estimation model ${r}^{⇀} \left(t\right)$ 650 of the satellite 160.

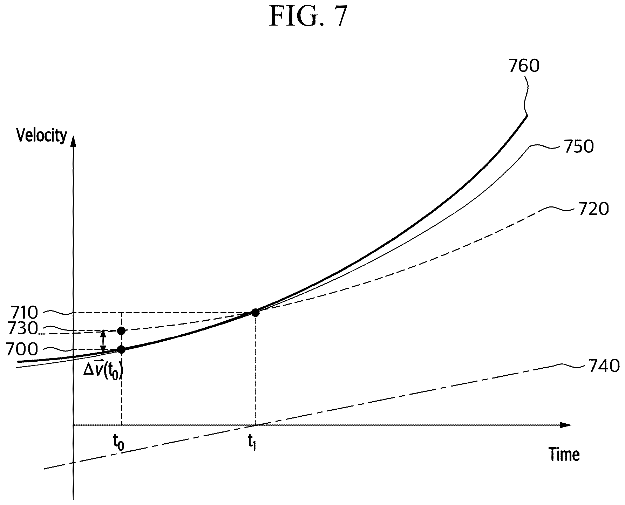

FIG. 7 is a diagram for describing a process of the terminal 120 estimating a velocity of the satellite 160 according to an example implementation. A description redundant with the above descriptions with reference to FIGS. 2 and 5 will be described briefly or omitted.

The terminal 120 may obtain a first velocity vector of the satellite 160 at a first reference time based on first ephemeris information. As an example, with reference to FIG. 7, the terminal 120 may obtain first ephemeris information from first system information received from the satellite 160 and extract a first velocity vector ${{v}^{⇀}}_{0} \left({t}_{0}\right)$ 700 of the satellite 160 at a first reference time *t*₀ from the first ephemeris information.

The terminal 120 may obtain a second velocity vector of the satellite 160 at a second reference time based on second ephemeris information. As an example, with reference to FIG. 7, the terminal 120 may obtain second ephemeris information from second system information received from the satellite 160 and extract a second velocity vector ${{v}_{1}}^{⇀} \left({t}_{1}\right)$ 710 of the satellite 160 at a second reference time *t*₁ from the second ephemeris information.

The terminal 120 may define a velocity estimation model for the satellite 160 based on the second velocity vector. As an example, with reference to FIG. 7, the terminal 120 may define a velocity estimation model ${{v}_{1}}^{⇀} \left(t\right)$ 720 for estimating a velocity of the of the satellite 160 based on the second velocity vector ${{v}_{1}}^{⇀} \left({t}_{1}\right)$ 710 of the satellite 160 at the second reference time *t*₁.

The terminal 120 may calculate a third velocity vector of the satellite 160 at the first reference time based on the velocity estimation model. As an example, with reference to FIG. 7, the terminal 120 may obtain a third velocity vector ${{v}_{1}}^{⇀} \left({t}_{0}\right)$ 730 of the satellite 160 at the first reference time *t*₀ by inputting a value corresponding to the first reference time *t*₀ to the velocity estimation model ${{v}_{1}}^{⇀} \left(t\right)$ 720.

The terminal 120 may define an error model for a velocity of the satellite 160 based on a difference between the first velocity vector and the third velocity vector. As an example, with reference to FIG. 7, the terminal 120 may calculate a difference $Δ {v}^{⇀} \left({t}_{0}\right)$ between the first velocity vector ${{v}^{⇀}}_{0} \left({t}_{0}\right)$ 700 and the third velocity vector ${{v}_{1}}^{⇀} \left({t}_{0}\right)$730, and define an error model ${{e}^{⇀}}_{v} \left(t\right)$ 740 for the velocity of the satellite 160 based on the difference $Δ {v}^{⇀} \left({t}_{0}\right)$.

The terminal 120 may define a final velocity estimation model of the satellite 160 based on the velocity estimation model and the error model of the satellite 160. As an example, with reference to FIG. 7, the terminal 120 may determine a sum of the velocity estimation model ${{v}_{1}}^{⇀} \left(t\right)$ 720 of the satellite 160 and the error model ${{e}^{⇀}}_{v} \left(t\right)$ 740 as a final velocity estimation model ${v}^{⇀} \left(t\right)$ 750.

The terminal 120 may estimate a velocity of the satellite 160 at a second time point based on the final velocity estimation model. As an example, the terminal 120 may obtain a velocity of the satellite 160 at the second time point by inputting a value corresponding to the second time point to the final velocity estimation model ${v}^{⇀} \left(t\right)$ 750 of the satellite 160.

Accordingly, estimation accuracy may be enhanced by the terminal 120 newly defining an error model for estimating a velocity of the satellite 160 based on an actual velocity of the satellite 160 at two time points. This, with reference to FIG. 7, may be confirmed through a small difference between an actual velocity 760 of the satellite 160 and the final velocity estimation model ${v}^{⇀} \left(t\right)$ 750 of the satellite 160.

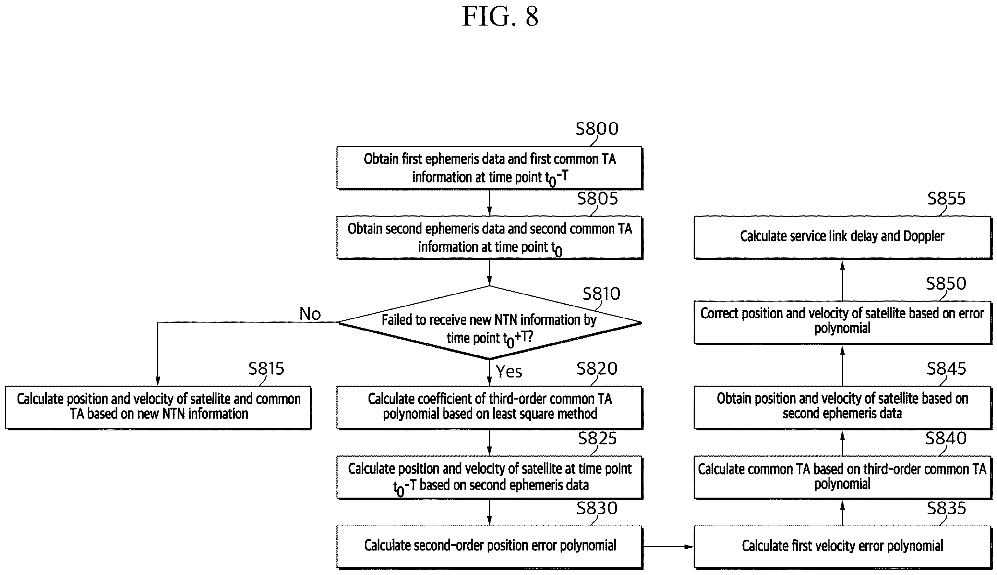

FIG. 8 illustrates a process of the terminal 120 transmitting a signal with compensated time delay and frequency offset according to an example implementation. A description redundant with the above description with reference to FIG. 2 will be described briefly or omitted.

In operation S800, the terminal 120 may obtain first ephemeris data and first common TA information at a time point t₀ - T. As an example, the terminal 120 may receive a first system information block (SIB) at the time point t₀ - T, and extract the first ephemeris data and the first common TA information from the first SIB.

In operation S805, the terminal 120 may obtain second ephemeris data and second common TA information at a time point t₀. As an example, the terminal 120 may receive a second system information block (SIB) at the time point t₀ and extract the second ephemeris data and the second common TA information from the second SIB.

In operation S810, the terminal 120 may identify whether new NTN information has been received by a time point t₀ + T. As an example, the terminal 120 may identify whether new ephemeris data and common TA information have been received within a validity duration T from the time the second ephemeris data and the second common TA information were obtained. When it is identified that the new NTN information has been received by the time point t₀ + T, the terminal 120 may perform operation S815, and when it is identified that the new NTN information has not been received by the time point t₀ + T, the terminal 120 may perform operation S820.

In operation S815, the terminal 120 may calculate a position, a velocity, and a common TA of the satellite 160 based on the new NTN information. As an example, when it is identified that the new NTN information has been received by the time point t₀ + T in operation S810, the terminal 120 may calculate a position and a velocity of the satellite 160 and a time delay between the satellite 160 and the base station 140, based on the new ephemeris data and common TA information.

In operation S820, the terminal 120 may calculate a coefficient of a third-order common TA polynomial based on the least square method. As an example, when it is identified that the new NTN information has not been received by the time point t₀ + T in operation S810, the terminal 120 may calculate a coefficient of the third-order common TA polynomial for estimating a signal delay time between the satellite 160 and the based station 140 by applying the least square method to the first common TA information and the second common TA information.

In operation S825, the terminal 120 may calculate a position and a velocity of the satellite 160 at the time point t₀ - T based on the second ephemeris data. As an example, the terminal 120 may define a model for estimating a position and a velocity of the satellite 160 based on the second ephemeris data and obtain a position and a velocity of the satellite 160 at the time point t₀ - T by inputting a value corresponding to the time point t₀ - T to the defined model.

In operation S830, the terminal 120 may calculate a second-order position error polynomial. As an example, the terminal 120 may define the second-order position error polynomial based on a difference between the position of the satellite 160 at the time point t₀-T estimated through the position estimation model and the position of the satellite 160 at the time point t₀-T included in the first ephemeris data.

In operation S835, the terminal 120 may calculate a first-order velocity error polynomial. As an example, the terminal 120 may define the first-order velocity error polynomial based on a difference between the velocity of the satellite 160 at the time point t₀-T estimated through the velocity estimation model and the velocity of the satellite 160 at the time point t₀-T included in the first ephemeris data.

In operation S840, the terminal 120 may calculate a common TA based on the third-order common TA polynomial. As an example, the terminal 120 may obtain a common TA indicating a time delay between the satellite 160 and the base station 140 based on the third-order common TA polynomial.

In operation S845, the terminal 120 may calculate a position and a velocity of the satellite 160 based on the second ephemeris data. As an example, the terminal 120 may obtain a position and a velocity of the satellite 160 at a time point t by inputting a value corresponding to the time point t to the position estimation model and the velocity estimation model defined based on the second ephemeris data.

In operation S850, the terminal 120 may correct the position and the velocity of the satellite 160 based on the error polynomials. As an example, the terminal 120 may obtain a correction value for the position of the satellite 160 at the time point t by inputting a value corresponding to the time point t to the second-order position error polynomial, and determine a final position of the satellite 160 at the time point t by summing the position of the satellite 160 at the time point t obtained in operation S845 and the correction value for the position of the satellite 160 at the time point t. Additionally, the terminal 120 may obtain a correction value for the velocity of the satellite 160 at the time point t by inputting a value corresponding to the time point t to the first-order velocity error polynomial, and determine a final velocity of the satellite 160 at the time point t by summing the velocity of the satellite 160 at the time point t obtained in operation S845 and the correction value for the velocity of the satellite 160 at the time point t.

In operation S855, the terminal 120 may calculate a service link delay and a Doppler. As an example, the terminal 120 may calculate a Doppler frequency offset that may occur depending on a time delay between the satellite 160 and the terminal 120, and a relative velocity between the terminal 120 and the satellite 160, based on the final position and the final velocity of the satellite 160 and a position and a velocity of the terminal 120 at the time point t.

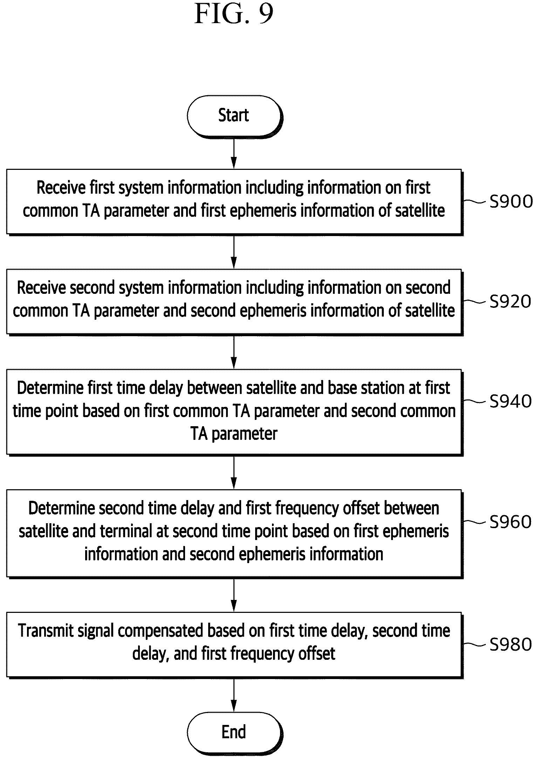

FIG. 9 is a flowchart illustrating an operation method of a terminal according to an example implementation. According to an example implementation, the method shown in FIG. 9 may be performed by the terminal 120 of FIGS. 2 and 3. Hereinafter, FIG. 9 will be described with reference to FIG. 2. The above-described descriptions may be applied to a redundant description.

In operation S900, the terminal 120 may receive the first system information including information on the first common TA parameter and the first ephemeris information of the satellite 160.

The first system information may also include information on the first validity duration of the first system information and the first reference time.

In operation S920, the terminal 120 may receive the second system information including information on the second common TA parameter and the second ephemeris information of the satellite 160.

The second system information may also include information on the second validity duration of the second system information and the second reference time.

In operation S940, the terminal 120 may calculate a first time delay between the satellite 160 and the base station 140 at a first time point based on the first common TA parameter and the second common TA parameter.

The terminal 120, when calculating the first time delay, may define a model for estimating a time delay between the satellite 160 and the base station 140 based on the first validity duration, the first reference time, the first common TA parameter, the second validity duration, the second reference time, and the second common TA parameter, and calculate the first time delay based on the model.

The terminal 120, when defining the model, may obtain first coefficients of the first second-order polynomial model for estimating a time delay between the satellite 160 and the base station 140 from the first reference time during the first validity duration, obtain second coefficients of the second second-order polynomial model for estimating a time delay between the satellite 160 and the base station 140 from the second reference time during the second validity duration, and calculate, based on the first validity duration, the first reference time, the first coefficients, the second validity duration, the second reference time, and the second coefficients, third coefficients of a third-order polynomial model for estimating a time delay between the satellite 160 and the base station 140 with reference to the second reference time.

The third coefficients may include a value that minimizes a sum of a magnitude of a difference between a time delay according to the third-order polynomial model and a time delay according to the first second-order polynomial model during a time period from the first reference time to a time beyond the first validity duration, and a magnitude of a difference between a time delay according to the third-order polynomial model and a time delay according to the second second-order polynomial model during a time period from the second reference time to a time beyond the second validity duration.

In operation S960, the terminal 120 may calculate a second time delay and a first frequency offset between the satellite 160 and the terminal 120 at a second time point based on the first ephemeris information and the second ephemeris information.

The terminal 120, when calculating the second time delay and the first frequency offset, may obtain a first position vector and a first velocity vector of the satellite 160 at the first reference time based on the first ephemeris information, obtain a second position vector and a second velocity vector of the satellite 160 at the second reference time based on the second ephemeris information, define a first error model for a position of the satellite 160 and a second error model for a velocity of the satellite 160 based on the first position vector, the first velocity vector, the second position vector, and the second velocity vector, estimate a position and a velocity of the satellite 160 at the second reference time, based on the first error model and the second error model, and calculate the second time delay and the first frequency offset based on the position and the velocity of the satellite 160 and a position and a velocity of the terminal 120 at the second reference time.

The terminal 120, when defining the first error model and the second error model, may convert the first position vector, the first velocity vector, the second position vector, and the second velocity vector from the ECEF coordinate system to the ECI coordinate system, define a position estimation model of the satellite 160 and a velocity estimation model of the satellite 160 based on the second position vector and the second velocity vector, estimate a third position vector and a third velocity vector of the satellite 160 at the first reference time based on the position estimation model and the velocity estimation model, define the first error model based on a difference between the first position vector and the third position vector, and define the second error model based on a difference between the first velocity vector and the third velocity vector.

The terminal 120, when estimating a position and a velocity of the satellite 160, may obtain a position of the satellite 160 at the second time point based on the position estimation model and the first error model, obtain a velocity of the satellite 160 at the second time point based on the velocity estimation model and the second error model, and convert the position and the velocity of the satellite 160 at the second time point from the ECI coordinate system to the ECEF coordinate system.

The first error model may be determined based on a modeling method used by the position estimation model, and/or second error model may be determined by a modeling method used by the velocity estimation model.

In operation S980, the terminal 120 may transmit a signal compensated based on the first time delay, the second time delay, and the first frequency offset.

The terminal 120 may determine whether third system information has been received within the second validity duration from the second reference time, calculate, when the third system information has not been received, a third time delay between the satellite 160 and the base station 140 at a third time point based on the first common TA parameter and the second common TA parameter, calculate, when the third system information has not been received, a fourth time delay and a second frequency offset between the satellite 160 and the terminal 120 at a fourth time point based on the first ephemeris information and the second ephemeris information, and transmit a signal compensated based on the third time delay, the fourth time delay and the second frequency offset.

The terminal 120 may determine whether third system information has been received within the second validity duration from the second reference time, calculate, when the third system information has been received, a third time delay between the satellite 160 and the base station 140 at a third time point based on the second common TA parameter and a third common TA parameter included in the third system information, calculate, when the third system information has been received, a fourth time delay and a second frequency offset between the satellite 160 and the terminal 120 at a fourth time point based on the second ephemeris information and third ephemeris information included in the third system information, and transmit a signal compensated based on the third time delay, the fourth time delay, and the second frequency offset.

The first time delay may include at least one of time required for the satellite 160 to receive system information transmitted by the base station 140, and time expected to be required for the base station 140 to receive a signal transmitted by the satellite 160, the second time delay may include at least one of time required for the terminal 120 to receive system information transmitted by the satellite 160 and time expected to be required for the satellite 160 to receive a signal transmitted by the terminal 120, and the first frequency offset may include a variation in frequency changed according to a relative velocity between the terminal 120 and the satellite 160.

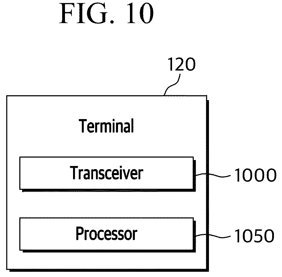

FIG. 10 is a block diagram of the terminal 120 according to an example implementation.

According to an example implementation, the terminal 120 may include a transceiver 1000 and a processor 1050. Only components related to the example implementation are shown with respect to the terminal 120 illustrated in FIG. 10. Accordingly, in some implementations, general-purpose components other than the components illustrated in FIG. 10 may also be included.

As a device for wired/wireless communication, the transceiver 1000 may communicated with an external electronic device. The external electronic device may be a terminal or a server. Additionally, communication technologies used by the transceiver 1000 may include code division multiple access (CDMA), frequency division multiple access (FDMA), time division multiple access (TDMA), orthogonal frequency division multiple access (OFDMA), and single carrier frequency division multiple access (SC-FDMA), and the like.

The processor 1050 may control overall operation of the terminal 120, and process data and a signal. The processor 1050 may be embodied as at least one hardware unit. In some implementations, the processor 1050 may be operated by one or more software modules created by executing program code stored in a buffer. As the processor 1050 may include a memory, the processor 1050 may control overall operation of the terminal 120, and process data and a signal by executing program code stored in the memory.

According to an example implementation, the processor 1050 may perform at least one of the operations of the terminal 120 described above with reference to the drawings. As an example, the processor 1050 may receive the first system information including information on the first common TA parameter and the first ephemeris information of the satellite 160 through the transceiver 1000, receive the second system information including information on the second common TA parameter and the second ephemeris information of the satellite 160 through the transceiver 1000, calculate a first time delay between the satellite 160 and the base station 140 at the first time point based on the first common TA parameter and the second common TA parameter, calculate a second time delay and a first frequency offset between the satellite 160 and the terminal 120 based on the first ephemeris information and the second ephemeris information, and transmit a signal compensated based on the first time delay, the second time delay, and the first frequency offset through the transceiver 1000. As another example, the processor 1050 may receive the first system information through the transceiver 1000 at the first time point, receive the second system information through the transceiver 1000 at the second time point, calculate a first time delay between the satellite 160 and the base station 140, and a second time delay and a first frequency offset between the satellite 160 and the terminal 120 based on the first system information and the second system information, and transmit a signal compensated based on the first time delay, the second time delay, and the first frequency offset at the third time point through the transceiver 1000.

The terminal in accordance with the example implementations described above may include a processor, a memory that stores and executes program data, a permanent storage such as a disk drive, a communication port for communication with an external device, and a user interface device such as a touch panel, a key, and a button. Methods implemented as software modules or algorithms may be stored in a computer-readable recording medium as computer-readable code or program instructions that are executable by the processor. Here, the computer-readable recording medium may be a magnetic storage (such as a read-only memory (ROM), a random-access memory (RAM), a floppy disk, and a hard disk), an optical storage medium (such as a CD-ROM, and a digital versatile disc (DVD)), and the like. The computer-readable recording medium may be dispersed to computer systems connected by a network so that computer-readable code may be stored and executed in a dispersion manner. The medium may be read by a computer, stored in a memory, and executed by a processor.

The example implementations may be represented by functional blocks and various processing steps. These functional blocks may be implemented by various numbers of hardware and/or software configurations that execute specific functions. As an example, the example implementations may adopt direct circuit configurations such as a memory, a processor, a logic circuit, and a look-up table that may execute various functions by control of one or more microprocessors or other control devices. Similarly to that elements may be executed by software programming or software elements, the example implementations may be implemented by programming or scripting languages such as C, C++, Java, and assembler including various algorithms implemented by combinations of data structures, processes, routines, or of other programming configurations. Functional aspects may be implemented by algorithms executed by one or more processors. In addition, the example implementations may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor, for example.

In some implementations, the processor (e.g., processor 1050) discussed in the present disclosure may include one or more processors. In some implementations, all of the functions of the respective processor may be performed by a single processor. In other implementations, the functions of the respective processor may be distributed among multiple processors (e.g., one processor performs a subset of the functions of the respective processor while one or more other processors perform the remaining functions of the respective processor.)

While the present disclosure contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations, one or more features from a combination can in some cases be excised from the combination, and the combination may be directed to a sub-combination or variation of a sub-combination.

The example implementations described above are merely examples and other implementations may be implemented within the scope of the following claims.

## Claims

1. An operation method, performed by a terminal (120), the method comprising:
receiving (S210, S310, S900) first system information including information on a first common timing advance, TA, parameter and first ephemeris information of a satellite (160);
receiving (S225, S325, S920) second system information including information on a second common TA parameter and second ephemeris information of the satellite (160);
determining (S230, S330, S940) a first time delay between the satellite (160) and a base station (140) at a first time point, based on the first common TA parameter and the second common TA parameter;
determining (S235, S335, S960) a second time delay and a first frequency offset between the satellite (160) and the terminal at a second time point, based on the first ephemeris information and the second ephemeris information; and
transmitting (S240, S340, S980) a signal compensated based on the first time delay, the second time delay, and the first frequency offset.

2. The method of claim 1,
wherein the first system information includes information on a first validity duration of the first system information and information on a first reference time, and/or
wherein the second system information includes information on a second validity duration of the second system information and information on a second reference time.

3. The method of claim 2, wherein the determining (S230, S330, S940) of the first time delay comprises:
defining a model for estimating a time delay between the satellite (160) and the base station (140), based on the first validity duration, the first reference time, the first common TA parameter, the second validity duration, the second reference time, and the second common TA parameter; and
determining the first time delay based on the model.

4. The method of claim 3, wherein the defining of the model comprises:
determining (S400) first coefficients of a first second-order polynomial model for estimating a time delay between the satellite (160) and the base station (140) from the first reference time during the first validity duration, based on the first common TA parameter;
determining (S440) second coefficients of a second second-order polynomial model for estimating a time delay between the satellite (160) and the base station (140) from the second reference time during the second validity duration, based on the second common TA parameter; and
determining (S460) third coefficients of a third-order polynomial model for estimating a time delay between the satellite (160) and the base station (140) with reference to the second reference time, based on the first validity duration, the first reference time, the first coefficients, the second validity duration, the second reference time, and the second coefficients.

5. The method of claim 4, wherein the third coefficients comprise a value configured to minimize a sum of:
a magnitude of a difference between a time delay according to the third-order polynomial model and a time delay according to the first second-order polynomial model, during a time period from the first reference time to a time beyond the first validity duration; and
a magnitude of a difference between a time delay according to the third-order polynomial model and a time delay according to the second second-order polynomial model, during a time period from the second reference time to a time beyond the second validity duration.

6. The method of any of claims 2 to 5, wherein the determining (S235, S335, S960) of the second time delay and the first frequency offset comprises:
determining (S500) a first position vector and a first velocity vector of the satellite (160) at the first reference time, based on the first ephemeris information;
determining (S510) a second position vector and a second velocity vector of the satellite (160) at the second reference time, based on the second ephemeris information;
defining a first error model for a position of the satellite (160) and a second error model for a velocity of the satellite (160), based on the first position vector, the first velocity vector, the second position vector, and the second velocity vector;
estimating the position and the velocity of the satellite (160) at the second time point, based on the first error model and the second error model; and
determining (S580) the second time delay and the first frequency offset, based on the position and the velocity of the satellite (160) and a position and a velocity of the terminal (120) at the second time point.

7. The method of claim 6, wherein the defining of the first error model and the second error model comprises:
converting (S520) the first position vector, the first velocity vector, the second position vector, and the second velocity vector from an earth-centered earth-fixed, ECEF, coordinate system to an earth-centered inertial, ECI, coordinate system;
defining (S530) a position estimation model for the satellite (160) and a velocity estimation model for the satellite (160), based on the second position vector and the second velocity vector;
estimating (S540) a third position vector and a third velocity vector of the satellite (160) at the first reference time, based on the position estimation model and the velocity estimation model; and
defining (S550) the first error model based on a difference between the first position vector and the third position vector, and defining the second error model based on a difference between the first velocity vector and the third velocity vector.

8. The method of claim 7, wherein the estimating of the position and the velocity of the satellite (160) comprises:
determining (S560) the position of the satellite (160) at the second time point based on the position estimation model and the first error model, and the velocity of the satellite (160) at the second time point based on the velocity estimation model and the second error model; and
converting (S570) the position and the velocity of the satellite (160) at the second time point from the ECI coordinate system to the ECEF coordinate system.

9. The method of claim 7 or 8,
wherein the first error model is determined based on a modelling method of the position estimation model, and/or
wherein the second error model is determined based on a modelling method of the velocity estimation model.

10. The method of any of claims 2 to 9, comprising:
determining whether third system information is received within the second validity duration from the second reference time;
determining (S255), based on the third system information not being received, a third time delay between the satellite (160) and the base station (140) at a third time point based on the first common TA parameter and the second common TA parameter;
determining (S260), based on the third system information not being received, a fourth time delay and a second frequency offset between the satellite (160) and the terminal (120) at a fourth time point based on the first ephemeris information and the second ephemeris information; and
transmitting (S265) a signal compensated based on the third time delay, the fourth time delay, and the second frequency offset.

11. The method of any of claims 2 to 9, comprising:
determining whether third system information is received within the second validity duration from the second reference time;
determining (365), based on the third system information being received, a third time delay between the satellite (160) and the base station (140) at a third time point based on the second common TA parameter and a third common TA parameter included in the third system information;
determining (S370, based on the third system information being received, a fourth time delay and a second frequency offset between the satellite (160) and the terminal (120) at a fourth time point based on the second ephemeris information and third ephemeris information of the satellite (160) included in the third system information; and
transmitting (S375) a signal compensated based on the third time delay, the fourth time delay, and the second frequency offset.

12. The method of any preceding claim,
wherein the first time delay includes at least one of a time required for the satellite (160) to receive system information transmitted by the base station (140) or a time expected to be required for the base station (140) to receive a signal transmitted by the satellite (160),
wherein the second time delay includes at least one of a time required for the terminal (120) to receive system information transmitted by the satellite (160) or a time expected to be required for the satellite (160) to receive a signal transmitted by the terminal (120), and/or
wherein the first frequency offset includes a variation in frequency changed according to a relative velocity between the terminal (120) and the satellite (160).

13. A terminal (120) comprising:
a transceiver (1000); and
one or more processors (1050),
wherein the one or more processors (1050) are configured to:
receive (S210, S310, S900) first system information including information on a first common TA parameter and first ephemeris information of a satellite (160), through the transceiver (1000);
receive (S225, S325, S920) second system information including information on a second common TA parameter and second ephemeris information of the satellite (160), through the transceiver (1000);
determine (S230, S330, S940) a first time delay between the satellite (160) and a base station (140) at a first time point based on the first common TA parameter and the second common TA parameter;
determine (S235, S335, S960) a second time delay and a first frequency offset between the satellite (160) and the terminal (120) at a second time point based on the first ephemeris information and the second ephemeris information; and
transmit (S240, S340, S980) a signal compensated based on the first time delay, the second time delay, and the first frequency offset, through the transceiver (1000).

14. The terminal (120) of claim 13,
wherein the first system information includes information on a first validity duration of the first system information and information on a first reference time, and/or
wherein the second system information includes information on a second validity duration of the second system information and information on a second reference time.

15. The terminal (120) of claim 14, wherein the one or more processors (1050) are configured to determine the first time delay by:
defining a model for estimating a time delay between the satellite (160) and the base station (140), based on the first validity duration, the first reference time, the first common TA parameter, the second validity duration, the second reference time, and the second common TA parameter; and
determining the first time delay based on the model.
